# EUROPEAN PATENT APPLICATION

(11) **EP 1 659 811 A1**
(43) Date of publication of application: **24.05.2006**
(21) Application number: 04425858.0
(22) Date of filing: 18.11.2004
(51) Int. Cl.: H04Q 7/34

(54) **Method for checking the operational status of a CS or PS domain in an UMTS network node**

(71) Applicant: Siemens Mobile Communications S.p.A., 20126 Milano (IT)
(72) Inventor: Buzzoni, Silvia, 20141 Milano (IT); De Benedittis, Rossella, 20137 Milano (IT)
(74) Representative: Giustini, Delio

(57) **Abstract**

In 3GPP UMTS networks the access to the CS and PS services of the camped UEs is controlled via System Information (SIB1, SIB3/SIB4) and Paging. For an efficient control of these accesses it is however important to know which Network Nodes inside the UTRAN and the Core Network (CN) are currently congested or out of service for the CS and PS domains. When the information on the unavailability of a remote node domain can not reach a local node, the known countermeasures cause indistinct interruption of all domain services running in the cell/s is spite the node is really out of service or in service. The present method is implemented by a local node to safely check the state of the remote node domains. When a local node perceives a congestion on its call processor/s or detect an internal alarm, sends a RANAP compliant connectionless STATUS REQUEST message to each involved remote node and for a specific domain; then waits for a respective acknowledgement within a first defined time interval ΔT1, after which the sending/waiting steps can be repeated up to N times. Each remote node domain at the reception of a STATUS REQUEST message shall reply with an acknowledgement within a second time interval ΔT2. The local node whether no acknowledgement is received to the last sent STATUS_REQUEST message, concludes that the enquired remote node domain is out of service and carries out preventive actions directed to inhibit the mobile terminals to access to the services provided by the remote unavailable node. Optionally, an alarm/warning indication is sent to the OMC. At periodical time intervals ΔT3 the local node sends the STATUS_REQUEST message to the out of service node domain. At the acknowledgement reception, the local node concludes that the remote node domain becomes available again and therefore restores the inhibited services and clears the alarm/warning at the OMC (fig.9).

## Description

### FIELD OF THE INVENTION

The present invention relates to the field of the wireless digital communication networks and more precisely to a method to safely check whether a CS or PS domain in an UMTS network node is still properly working or it is out of service. The description wiii be provided for a UMTS FDD and TDD system, where this item well fits due to the specific network architecture, but can be easily extended to other kinds of cellular networks, like for instance GSM, which make use of a similar network architecture. A list of used acronyms and bibliographic references is reported at the end of the description.

### BACKGROUND ART

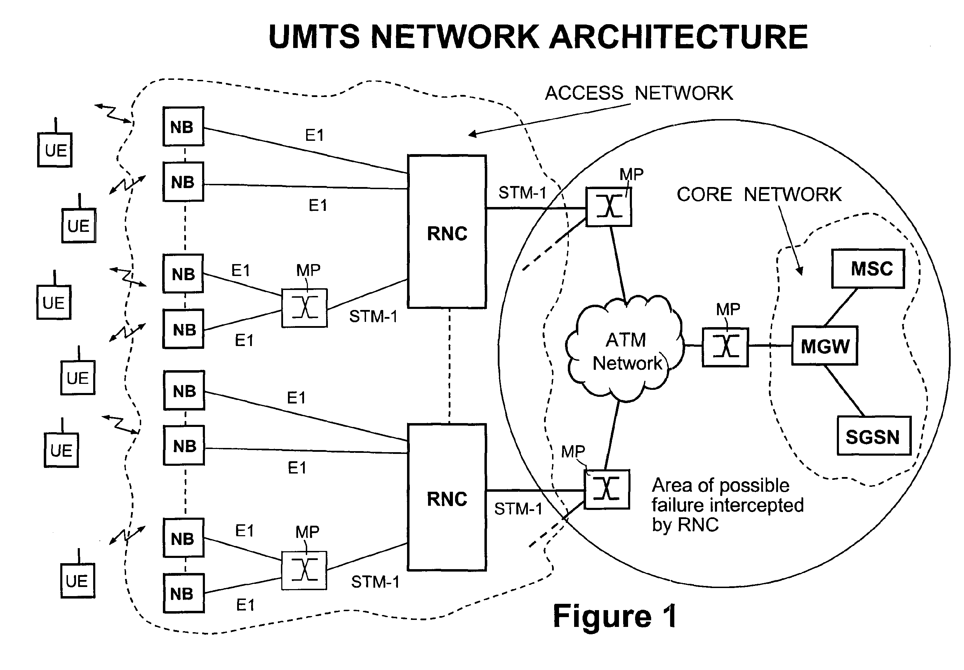

**Fig.1** reports a general block diagram of a UMTS system. With reference to fig.1, the system is constituted by a Core Network (CN), an Access Network as the 3GPP UTRAN, and a plurality of User Equipments (UE). The Access Network includes a plurality of base stations, called NodeBs (NB), connected via radio to the served UEs and via terrestrial lines to one ore more respective Radio Network Controllers RNC. Two-way connections between NBs and RNC take place either directly on E1 lines or by means of an interposed STM multiplexer/demultiplexer, MP, for E1/STM-1 lines. The simplified Core Network includes the following network elements named: MSC, SGSN, and MGW. MSC is specific for serving Circuit Switched (CS) domain, SGSN for Packet Switched (PS) domain, while MGW performs the gateway function between the two CN domains and each domain and the Access Network. The connections between the Core and the Access Network take place either straightforward or by an interposed ATM network with switches MP for STM lines at the two sides. Although not shown in the figure, the Core Network is connected to a PSTN, the IP network, and even other PLMNs. The various Network Elements represented in fig.1 are connected to each other via standardised line interfaces such as: the Uu air interface between the UEs and NodeBs; the lub interface between RNC and NodeBs; the lur interface between two RNCs with the same or adjacent cells; the lu(CS) interface between RNC and MSC, and the lu(PS) interface between RNC and SGSN.

In operation, a NB is composed of one or more cells; inside a cell the NB is responsible of the radio transmission and reception of the signals to/from the User Equipments (UE). The NB is further responsible of Layer 1 (physical) protocol stack as well as of the requested line protocols for interfacing the RNC. The controller RNC is responsible of Layer 2 (RLC, MAC) and Layer 3 (RRC) protocol stacks, as well as of the requested line protocols for interfacing the Core Network and the controlled NBs. The Core Network is responsible for routing both signalling and payload relevant to the CS and PS domains between the originating and terminating nodes at the two sides.

In the UMTS network of **fig.1** it is possible for a CN domain (or for the UTRAN) to inform the UTRAN (or a CN domain) of its congestion state sending a RANAP_OVERLOAD message. It is possible as well for the UTRAN (or for a CN domain) to send either a RANAP_RESET message or a RANAP_RESET_RESOURCE message to a CN domain (or UTRAN) to force the reset of allocated resources:
- The RANAP_OVERLOAD message informs the far entity that the sending part, though still working, is congested, thus suggesting the receiving part to restrict the access to its services. This procedure allows at a given extend for signalling flow control between the interacting nodes.
- The RANAP_RESET message is used by the sender to re-initialise the receiver in the event of a failure at the sender side. This procedure actually tears down every communication currently established between the message sender and the message receiver.
- The RANAP_RESET_RESOURCE message informs the receiver of a failure event at the sender, so that the receiver can locally reset the status of the affected resources. This procedure tears down a specific signalling connection currently established between the message sender and the message receiver.

All these procedures refer to the case that either the congested node, or the faulty one, informs the peer entity about its specific condition triggering a consequent action. Based on the outcome of these procedures implemented to decide, for example, the UTRAN behaviour, the UTRAN can selectively restrict the access of the camped UE to a specific CS or PS domain via System Information (see Ref.[1]). The 3GPP Standard, up to Release 6 included, provides the following mechanisms to control the access to a CN domain by the UTRAN:
- **Disabling the access to one specific CN domain via SIB1 signalling:** UEs can still camp on a cell characterized in this manner, but they are not allowed to access to the disabled Core Network domain services. This solution can be used to bar the access to a CN domain which results to be temporarily out of service. It is worth to remark that, while it is sensible to apply this solution for restricting the access to the PS domain, this may not be the case for the CS domain. In fact, inhibiting the access to the CS domain, implies to inhibit Emergency Calls as well. Now, according to 3GPP specifications (see Ref.[2]), a cell not allowing for emergency calls is not even suited to be camped on, meaning that barring the CS CN domain actually corresponds to bar the cell.
- **Cell barring via SIB3/SIB4 signalling:** No UE can camp on the barred cell, as neither Emergency Calls are allowed. The detection of the cell barred status, will force the UEs to perform cell reselection. This solution can be used when the CS CN domain is out of service.
- **Cell access restriction via SIB3/SIB4 signalling:** It is possible to restrict the access to a subset of UE access classes, independently of the Core Network domain. UEs which read their Access Class (AC) as barred, can camp on this cell but are not allowed to access to the services of any of the CN domain (Packet or Circuit). This solution is well suited to limit the cell traffic in case of congestion.

### OUTLINED TECHNICAL PROBLEM

For a correct and efficient use of the above mechanisms it is required that UTRAN knows whether a specific CN domain is out of service or properly working. However, it is not always possible for the UTRAN to get this information and take the consequent appropriate actions. For example it may happen that the far node (e.g. MSC or SGSN) crashes before informing the peer entity that it is going to run out of service. This can be the case that in consequence of a failure in the processor handling the RANAP at the far node, it is not in the condition to signal its temporarily unavailability to the peer entity. The unavailability of a specific Core Network domain, which is not signalled over the air by the connected UTRANs, brings to that the camped UEs will continuously try without success to access to the services of unavailable CN domain. The consequences are an increase of the system interference and of the load in the accessed UTRANs. On the other hand, signalling the unavailability of the CN domain which is actually properly working (as consequences of a wrong decision at the UTRAN), brings to that the camped UEs will not try to access to that CN domain services, causing loss of service.

A dual technical problem arises in the Core Network for a crash in the UTRAN because of the bidirectional behaviour of the aforementioned RANAP messages. The unavailability of a RNC which is not signalled over the lu interface will induce the CN domain continuously try without success to send messages, e.g.: paging, to the unavailable RNC. The consequence is an increase of the load in the CN processors and waste of lu transport resources. On the other hand, signalling the unavailability of the RNC which is actually properly working (as consequences of a wrong decision at the CN domain), brings to that the CN domain will not try to send messages, e.g.: paging, to the available RNC causing loss of service.

### OBJECTS OF THE INVENTION

An object of the present invention is that to overcome the drawbacks of the prior art and indicate a method by which an Access Network Node can safely check the in service or out of service status of a specific CS or PS domain of a Core Network Node, to prevent the mobile terminals of accessing to the services provided by the out of service domain. "Safe" check here means "without resetting" active connections.

Dual object of the present invention is that to indicate a method by which a Core Network Node can safely check the in service or out of service status of a specific Access Network Node, to prevent sending messages to mobile terminals camped on an out of service Access Network Node.

At present, 3GPP specifications (see Ref.[3]) do not foresee any means by which a UTRAN RNC can safely check the status of a CS or PS domain inside the Core Network, the same happens in the opposite direction.

### SUMMARY AND ADVANTAGES OF THE INVENTION

The invention achieves said objects by providing a method performable in a local node of a digital cellular communication system to discriminate between the out of service or in service status of a connected remote node, as disclosed in claim 1.

According to the method of the invention a local node which detects an internal alarm or perceives a run time congestion relatively to its call processor/s during the execution of usual CS and/or PS procedures with one or more remote nodes, starts an interrogation of the interconnected remote nodes sending a new RANAP-compliant status request message towards a specific domain of said nodes. The local node shall wait for an acknowledgement message from each interrogated node within a first defined time interval ΔT1, after that the previous sending/waiting step can be repeated up to N times, "N" being an integer equal to or greater than 1. At the reception of a status request message, each interrogated remote node shall reply with an acknowledgement message from the specific domain within a second time interval ΔT2. The local node, if no acknowledgement is received from a remote node within ΔT1 time interval to the last sent status request message, concludes that the enquired specific domain is out of service in that remote node. Hence the local node carries out known preventive actions directed to inhibit to the mobile terminals the access to services provided by the specific domain deemed to be unavailable in the non responding remote node. The local node (optionally) sends an alarm/warning indication to the Operation & Maintenance Centre (OMC) about the not responding node. Besides, at periodical time intervals ΔT3, the local node continues to send the status request message to the domain deemed to be out of service in the non responding node. In case the local node receives the acknowledgement message from said remote node, it concludes that the specific domain becomes available again in that node and therefore it can restore those services previously inhibited, resetting the alarm/warning indication at the OMC if previously sent. The aforementioned preventive actions are depending on which local node is starting the safely check. In case that the UTRAN is the interrogating node and MSC and SGSN are the checked nodes, said preventive actions consist in updating the System Information SIB1 and/or SIB3/SIB4 or, alternatively, in discarding the messages received from the camped mobile terminals and directed to the unavailable domain. In case the Core Network is the interrogating part and UTRAN is the checked part, a possible preventive action consists in discarding the Paging messages directed to the unavailable UTRAN. As known, the purpose of the Paging procedure is to enable the CN to request the UTRAN to contact UEs camped on that UTRAN. The paging procedure uses connectionless signalling.

The status request and the acknowledgment messages can be sent in connectionless mode.

From the above description it can be argued that the method of the invention contains an enquiry procedure on the status of a remote node. This procedure enables a local node, UTRAN or a specific CS or PS CN domain, to detect the true status of a remote node, a specific CS or PS domain or a UTRAN, in case the status information become de-facto impossible to be communicated by the remote node due for example to a crash in a remote node or to an interruption in the connection at the relevant interface, respectively lu(CS) and lu(PS). The local node shall therefore act in a manner to deduce from itself if a remote node domain is run out of service. This task may be indirectly performed beginning with checking the occurrence of a run time congestion of the internal call processor/s, so as to trigger the sending of enquiring messages and waiting for the corresponding replies. The congestion can be due to the overload of the call processors caused by a sudden increase on the signalling traffic generated by the repeated failed attempts to access the unavailable remote domain.

According to a variant of the invention valid for a local node that cannot discriminate which specific domain of the remote node could be the cause of its internal congestion, as many enquiring procedures, i.e. status request messages, are activated, i.e. sent, in parallel as the number of domains of the remote nodes (i.e.: sequentially with short time interval so as to appear parallel).

According to another variant of the invention valid for 3GPP UTRAN and GERAN, the pair of status request and the respective acknowledgement messages is replaced by RESET_RESOURCE and RESET_RESOURCE_ACKNOWLEDGE messages already existing in the RANAP protocol (see Ref.[3]). In order to avoid the reset of the active connections, the Information Element named "lu Signalling Connection Identifier" shall include a code used by none of the currently handled connections or a fictitious code recognised as such on the lu interface. It can be appreciated the originality of this variant consisting of using in a new way this pair of existing RANAP messages appositely standardized for selectively tear down established connections at the lu interface. The new use is aimed to avoid the reset of active connections at the lu interface: just the contrary of the standard proposal. This is possible because according to the current standardization (see Ref.[3]) it happens that:
1. The list of active connections is known at the local node, so that this node is aware of the unassigned codes. An alternative to the check of the list of unassigned codes is that to reserve some fictitious codes at the purpose of the far node enquiry procedure, avoiding their assignment to any real lu connection.
2. The remote node when reads an unassigned code in the "lu Signalling Connection Identifier" of the RESET_RESOURCE message, is forced to reply in any case with the RESET_RESOURCE_ACKNOWLEDGE message.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1,** already described, shows a UMTS network architecture suitable to implement the safely check method of the present invention;
- **fig.2** shows the main network elements interconnected through the lu interface of the UMTS network of fig.1 and the MTP-3 signalling protocols running on said network elements;
- **fig.3** shows the protocol stack at the lu interface towards the CS domain of the CN network;
- **fig.4** shows the protocol stack at the lu interface towards the PS domain of the CN network;
- **fig.5a** shows the structure of a new STATUS_REQUEST message transmitted at the lu interface according to the safely check method of the present invention;
- **fig.5b** shows the structure of the STATUS_REQUEST_ACKNOWLEDGE message to the previous STATUS_REQUEST message;
- **fig.6a** shows the structure of the existing RESET_RESOURCE message (see Ref.[3]) transmitted at the lu interface according to an alternative embodiment of the method of the present invention;
- **fig.6b** shows the structure of the RESET_RESOURCE_ACKNOWLEDGE message to the previous RESET_RESOURCE message;
- **figures 7** to **10** show some sequential diagrams embodying the safely check method of the present invention.

### DETAILED DESCRIPTION OF AN EMBODIMENT OF THE INVENTION

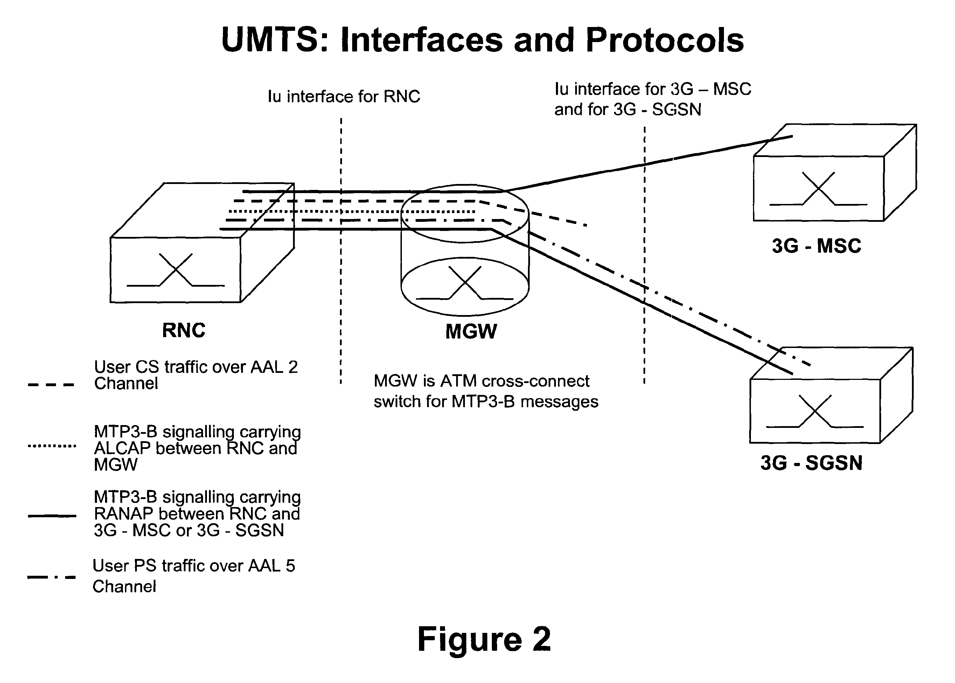

**Fig.1** has been already illustrated. In **fig.2** the lu interface between the RNC and MGW elements of fig.1 and between the MGW and both MSC and SGSN elements is highlighted together with the relevant signalling standard parts. As known, the description of the lu interface is based on the Open System Interconnection (OSI) Reference Model (see Rec. CCITT X.200). According to the OSI paradigm, whatever telecommunication system can be described by a set of sub-systems placed within a vertical sequence (stack). A sub-system N, that consists of one or more layer entities N, interacts only with the sub-systems placed above and beneath. A layer entity N performs functions within the layer N it belongs to. For the communication among N entities of equal layer (peer entities) a protocol called peer-to-peer is used. The information unit that is exchanged through a peer-to-peer protocol is called N-PDU (N-Protocol Data Unit), it includes data and a control information N-PCI (N-Protocol Control Information). Entities of equal layer N communicate between them using the services supplied by the layer underneath. Likewise, the services of the layer N are fed to layer N+1 at an access point called N-SAP (not indicated in the figures). Radio Access Bearer service (RAB) provides the capability of transmission of signals between access points according to either connection-oriented or connectionless mode and an assigned QoS class. In a connection oriented mode, a logical association called *connection* needs to be established between the source and the destination entities before information can be exchanged between them. In a connectionless mode, no connection is established beforehand between the source and the destination entities; the source and destination network addresses need to be specified in each message.

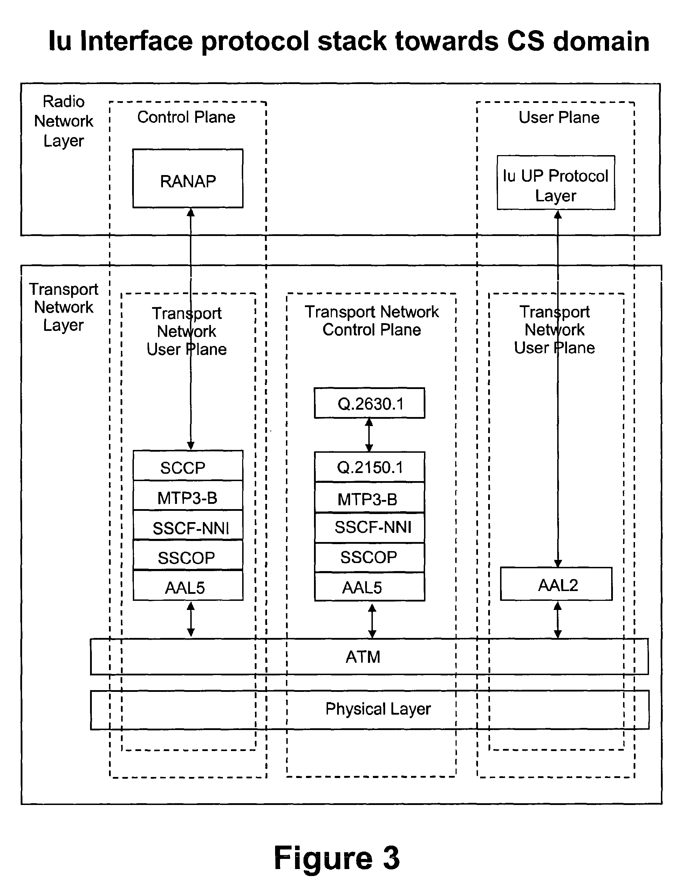

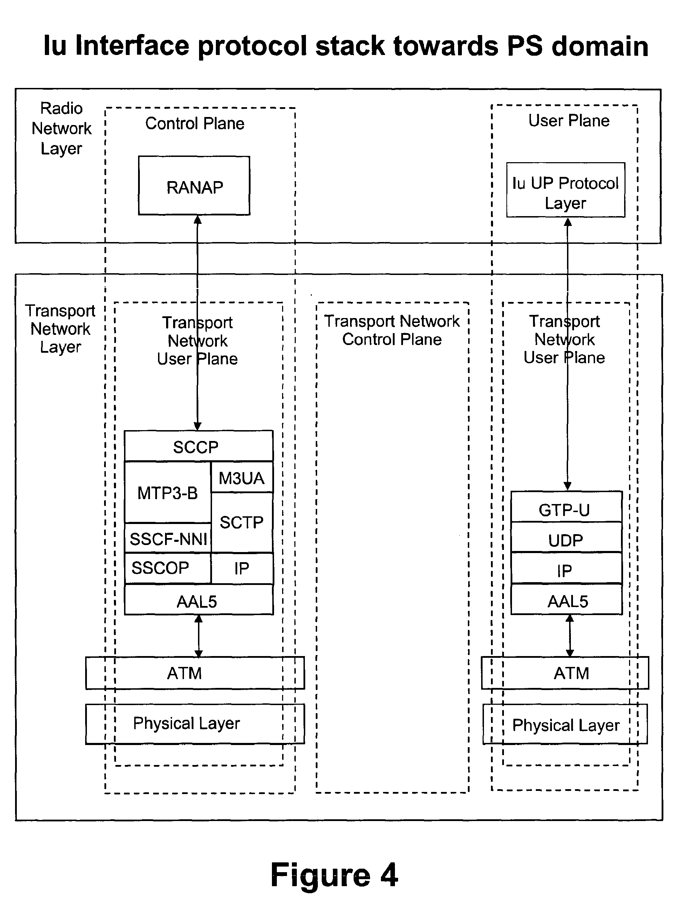

**Fig.3** reports the protocol stacks at the lu interface relevant to the CS domain. Protocol stacks are horizontally subdivided into Radio Network Layer and Transport Network Layer and vertically subdivided into User Plane, Control Plane, and Transport Network Control Plane. **Fig.4** reports the protocol stacks at the lu interface relevant to the PS domain. Horizontal and vertical subdivisions are similar to fig.3.

With reference to the **figures 3** and **4** we have just said that the lu interface consists of four protocol stacks:
- A data transport stack for the circuit switched traffic (also called CS user plane).
- A data transport stack for the packed oriented traffic (also called PS user plane).
- A transport signalling protocol stack which is responsible for setting up the AAL2 (see ITU Recommendation I.363.2 [4]). Its top layer is also called ALCAP (see ITU Recommendation Q.2630.1 [5]). The transport signalling stack is foreseen for the CS domain only.
- A Control signalling stack which comprises
- **RANAP** (see TS 25.413 [3]);
- *Connection Management* (CM), *Session Management* (SM), *Mobility Management* (MM) and GPRS *Mobility Management* messages which are sub-layers of the Non Access Stratum (NAS) layer;
- *Signalling Connection Control Part* (SCCP; see 3GPP TS 25.412 [5]) and *Message Transfer Part Layer 3 Broadband* (MTP3-B; see 3GPP TS 25.412 [5]) transport sublayers;
- *Service Specific Coordination Function* (SSCF-NNI; see ITU Recommendation Q.2140 [11]) and *Service Specific Connection Oriented Protocol* (SSCOP; see ITU Recommendation Q.2110 [7]) data link sub-layers;
- *Asynchronous Transfer Mode (ATM;* see ITU Recommendation 1.361 [8]) and STM-1 (see -ETSI STM-1 (155 Mb/s) interface according to I.432.2 [10] with electrical interface (CMI) to G.703 [9]).

The RANAP messages are used in some standard congestion control procedures, without safely check, already mentioned in the introduction. The RANAP protocol is placed at the top of the Control Plane of the lu interface. It is responsible for the transmission of a large variety of control information to be exchanged between the Serving RNC (S-RNC) and the Core Network (MSC as well as SGSN). Important function of the RANAP protocol are:
- RAB management; for the establishment, modification or release of one or more RABs for one specified UE.
- Paging; to find out the location of a UE in Mobility Management Idle State (only LAI or RAI known in the CN).
- Common Id Management; the permanent Id of the UE is sent from the CN to the S-RNC to enable a co-ordination of the paging of the UE from PS and the CS CN domains.
- lu Overload Control; to control the lu load and reduce stepwise the lu load in the case of overload.
- lu Release; for the release of all lu resources for the transmission of control and user data for one specified UE.
- NAS Information Transfer; Security Mode Control; General Error Indication; etc.

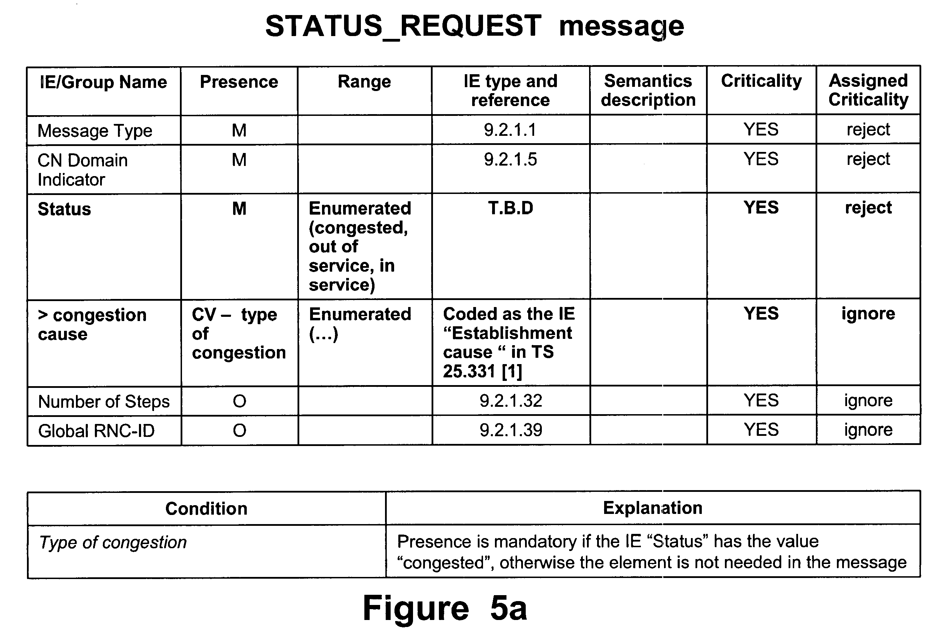

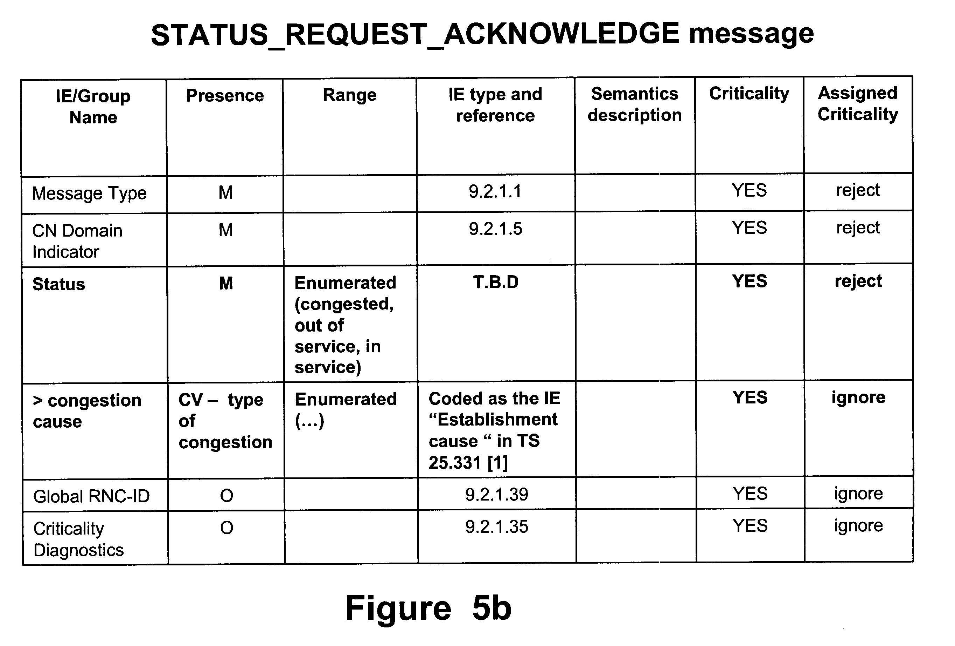

The content of a new RANAP compliant message called STATUS_REQUEST used in a preferred embodiment of the invention is shown in **fig. 5a**. The content of the STATUS_REQUEST_ACKNOWLEDGE reply message is shown in **fig.5b**. These new messages are represented in the figures according to the tabular form used to represent the 3GPP RRC messages. The description of the IEs already mentioned in Ref.[3] is referred to the corresponding Paragraphs indicated in the table. The following two IEs are created ex-novo: "**Status**" and "**congestion cause**". The Range of the "Status" is enumerated as: congested, out of service, and in service. The "congestion cause" is coded as the "IE Establishment cause" defined in Ref.[1]. The presence of the IE called "CN Domain Indicator" allows to discriminate between CS and PS domains. The two messages can be sent either by the UTRAN or by the specific CN domain using connectionless signalling.

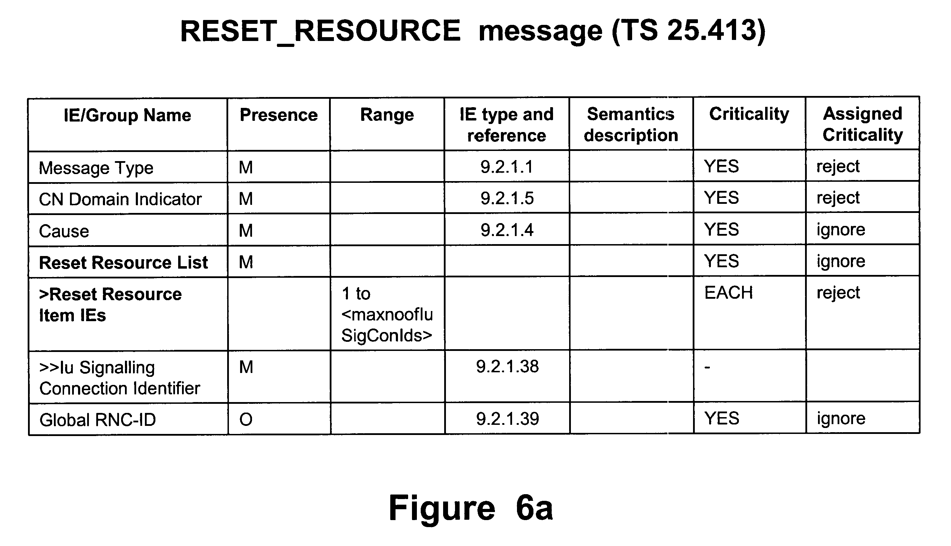

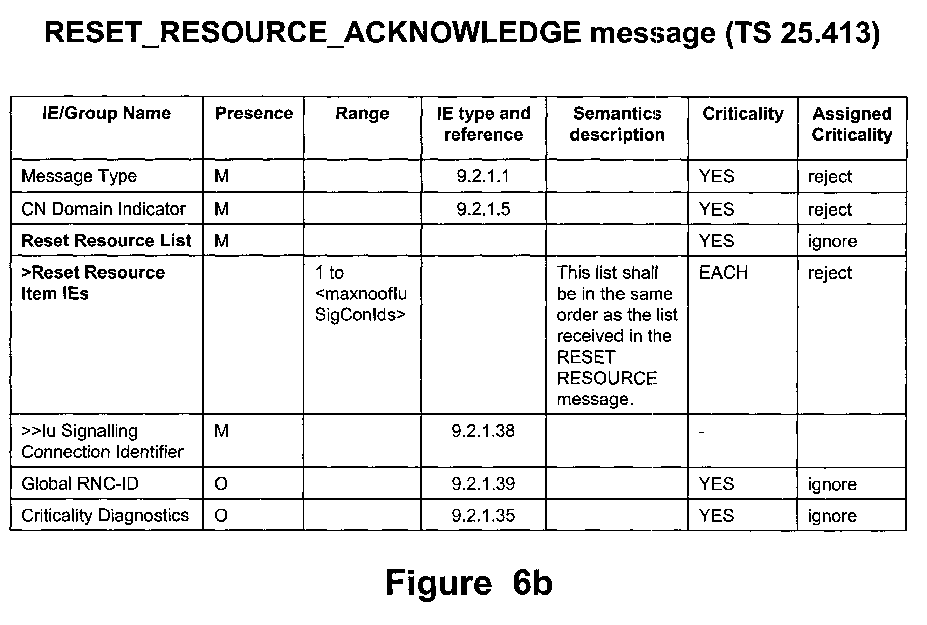

**Figures 6a** and **6b** reproduce the existing RANAP messages RESET_RESOURCE and RESET_RESOURCE_ACKNOWLEDGE (see Ref.[3]) which are presently used in a proprietary way not foreseen by the current standardization. According to an alternative embodiment of the invention, these two messages replace those represented in the figures 5a and 5b. They can be sent either by the UTRAN or by the specific CN domain, using connectionless signalling. The presence of the IE called "CN Domain Indicator" allows to discriminate between CS and PS domains. In order to avoid the reset of a running connection, a code unused by the handled connections is assigned to the IE called "lu Signalling Connection Identifier". Alternatively, a fictitious code recognised as such by all the Network Nodes is used. The field <maxnoofluSigConlds> means: Maximum no. of lu signalling connection identifiers; a possible value is 250.

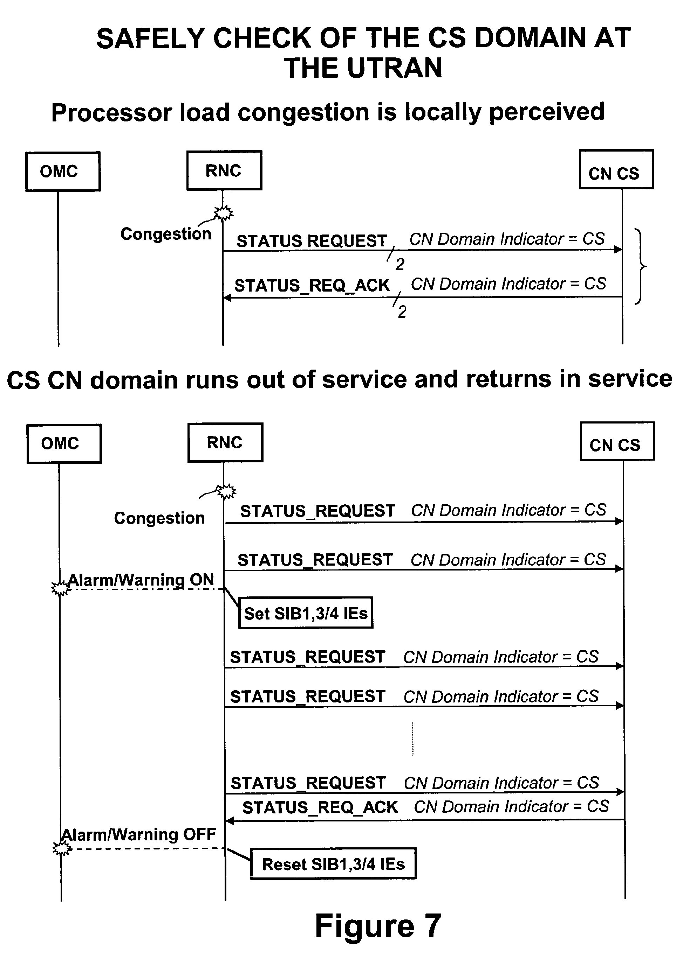

**Fig.7** shows a first embodiment of the safely check method of the present invention valid in case the CS CN domain fails. It is shown the scenario where the UTRAN is congested and starts enquiring the CS CN domain, assuming that the PS domain is correctly working and with that it is not indicated in fig.7. In the first part of Fig.7 it is assumed that the CS CN domain is yet working, as responding to the STATUS_REQUEST message sent by the UTRAN. Whereas in the second part of Fig.7, it is assumed that the CS CN domain is run out of service.. The complete procedure in this second part of **fig.7** is subdivided into three parts, called: "Processor load congestion is locally perceived", "CS CN domain runs out of service", and "CS CN domain returns in service". The procedure is illustrated for the STATUS_REQUEST and STATUS_REQUEST_ACKNOWLEDGE messages but it is valid without modifications also for the couple of the replacing messages RESET_RESOURCE and RESET_RESOURCE_ACKNOWLEDGE.

In the first part of the procedure the RNC perceives an overload of its call processors. The RNC starts an interrogation of the CS CN domain to test if the cause of congestion is due to a failure on this domain. At this purpose, the RNC sends a connectionless STATUS_REQUEST message to the CS domain and waits for a STATUS_REQUEST_ACKNOWLEDGE reply within a first defined time interval ΔT1, after which the sending/waiting steps can be repeated up to N times. Until the sending/waiting procedure is running, the RNC shall conclude that the interrogated CS CN domain is properly working, in spite of the run time congestion of its internal call processors. At the reception of a STATUS_REQUEST message, the interrogated CS CN domain shall reply with a STATUS_REQUEST_ACKNOWLEDGE message within a second time interval ΔT2 from the reception. This is not the case for the CS CN domain because this domain is run out of service (e.g.: due to a temporary failure) causing the perceived congestion. The RNC, as no STATUS_REQUEST_ACKNOWLEDGE message is received to the last sent STATUS_REQUEST message within ΔT1 time, concludes that the enquired CS CN domain is out of service and performs the following actions:
- continue to send, at periodical time intervals ΔT3, the STATUS_REQUEST message in order to detect whether the enquired CS CN domain becomes available again;
- update SIB1 and/or SIB3/4 System Information in order to select the appropriate grade of restrictions to the services provided to the UEs from the deemed out of service CS CN domain inside the remote node;
- optionally send an alarm/warning indication to the Operation & Maintenance Centre (OMC) about the not responding remote CS CN domain.
At a certain point in time, the CS CN domain returns in service and correctly replies with STATUS_REQUEST_ACKNOWLEDGE message to the enquiry. The RNC then assumes that the remote CS CN domain is entered in service again and consequently performs the following actions:
- stop to send the STATUS_REQUEST message to the remote CS CN domain;
- update the System Information, SIB1 and/or SIB3/SIB4, to restore the services inhibited in the cells;
- clear down the alarm/warning indication, if previously sent to the OMC.

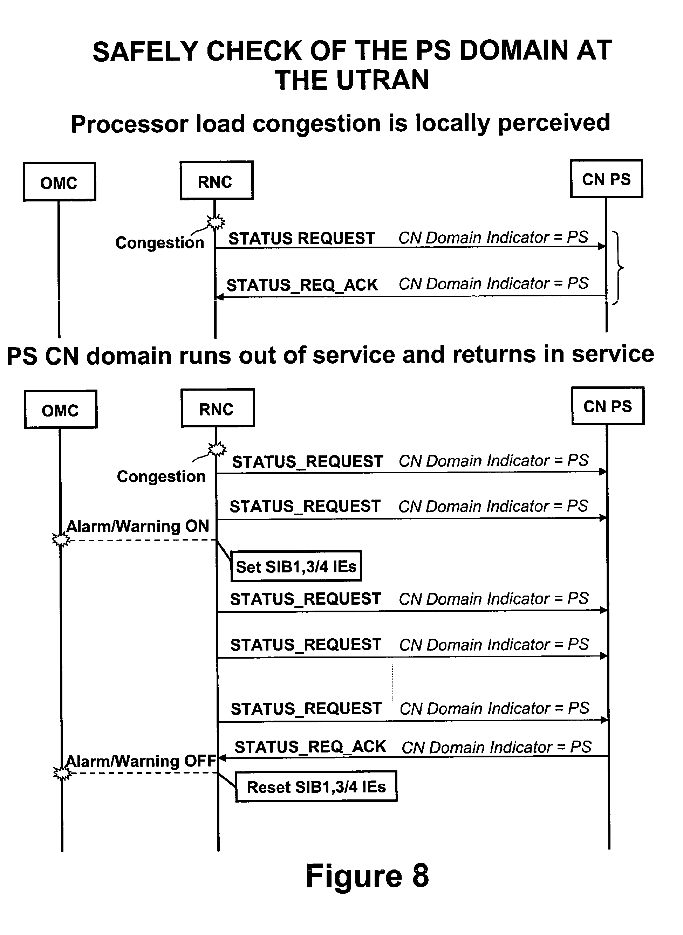

**Fig.8** shows a second embodiment of the safely check method valid in case the PS CN domain fails. The description of the figure is dual to the preceding case.

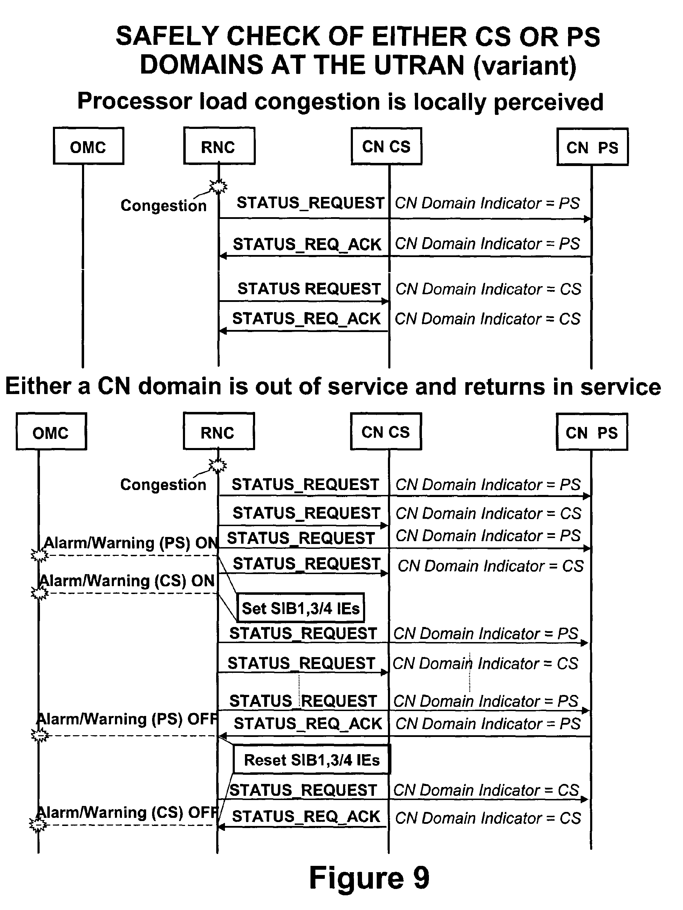

**Fig.9** shows a third embodiment of the safely check method valid in case both CN domains, CS and PS, fail but the RNC is not able to detect which of the two domains is run out of service. Therefore in this case the RNC sends two STATUS_REQUEST messages, one per CN domain. In the first part of Fig.9, both CN domains reply to the UTRAN enquiry sending the STATUS_REQUEST_ACKNOWLEDGE message, being both properly working. In the second part of Fig.9, no CN domain replies to the UTRAN, and therefore both domains are judged to be out of service.. In the last part of Fig.9, it is shown that finally both CN domains return into service, as both reply to the enquiring RNC with the STATUS_REQUEST_ACKNOWLEDGE message. The detection of such acknowledge messages bring the RNC to restore the services over the air and therefore to reset previously takenpreventive actions.

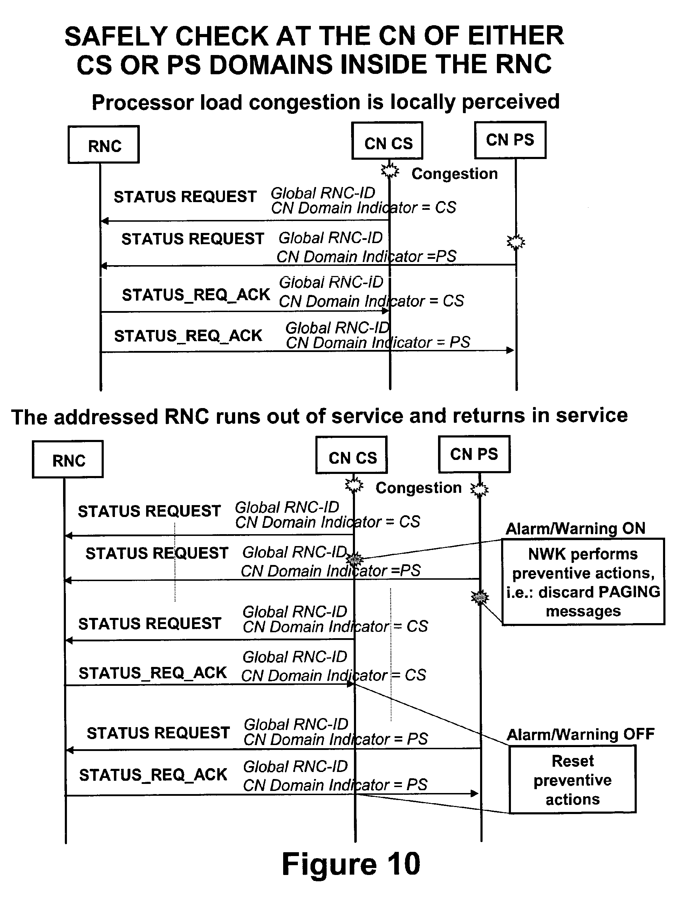

The three exemplary embodiments of the figures 7, 8, and 9 valid for an enquiring RNC, find three equivalent embodiments when the enquiring node is inside the Core Network and the interrogated node is an RNC. For the sake of simplicity, only one of these embodiments is illustrated in **fig.10** for a fourth embodiment of the invention dual to the third one of the previous **fig.9**. With reference to **fig.10**, the procedure is easily obtainable reversing the direction of the arrows in fig.9, because the CS and the PS CN domains are now the enquiring entities that send respective STATUS_REQUEST messages and wait for respective acknowledgements from the RNC. In the three parts of the procedure the interrogated RNC is addressed by its Global RNC-ID Information Element, while the enquirirng CS and PS domains are indicated by the respective CN Domain Indicators. When in the second part of the procedure either CN domain deduces that the addressed RNC is run out of service, some preventive actions finalized to stop messages towards the unavailable RNC are undertaken, i.e.: discard relevant PAGING messages. These actions are reset in the third part of the procedure when the the RNC sends its acknowledgements to the enquiring CN domains.

While a particular embodiment of the present invention has been shown and described, it should be understood that the present invention is not limited thereto since other embodiments may be made by those skilled in the art without departing from the ambit of the present invention.

One of these modifications consists in replacing the Acknowledgment message with a more generic Reply message.

An additional modification is to trigger the sending of the Status Request message immediately after the detection of an internal alarm.

A further modification consits in that the actions taken to prevent the mobile terminals for accessing the out of service domain is performed discarding messages received by the local node from the camped mobile terminals addressing that speciifc domain.

### USED ACRONYMS

- **3GPP**: 3^{rd} Generation Partnership Project
- **AC**: Access Class
- **CN**: Core Network
- **CS**: Circuit Switched
- **FDD**: Frequency Division Duplex
- **GSM**: Global System for Mobile
- **IE**: Information Element
- **LAI**: Routing Area Identity
- **MAC**: Medium Access Control layer
- **MM**: Mobility Management
- **MSC**: Mobile Switching Centre
- **NE**: Network Element
- **OMC**: Operation & Maintenance Centre
- **OSI**: Open System Interconnection
- **PS**: Packet Switched
- **PSTN**: Public Switched Telephone Network
- **QoS**: Quality of Service
- **RAB**: Radio Access Bearer
- **RAI**: Routing Area Identity
- **RANAP**: Radio Access Network Application Part
- **RLC**: Radio Link Control layer
- **RNC**: Radio Network Controller
- **RRC**: Radio Resource Control layer
- **SAP**: Service Access Point
- **SCCP**: Signalling Connection Control Part
- **SGSN**: Serving GPRS Support Node
- **SIB**: System Information Block
- **STMn**: Synchronous Transfer Mode-n
- **TDD**: Time Division Duplex
- **UE**: User Equipment
- **UMTS**: Universal Mobile Terrestrial System
- **UTRAN**: UMTS Radio Access Network

### REFERENCES

[1] TS 25.331 "3^{rd} Generation Partnership Project; Technical Specification Group Radio Access Network; Radio Resource Control (RRC); Protocol Specification (Release 99)".
[2] TS 25.304 "3^{rd} Generation Partnership Project; Technical Specification Group Radio Access Network; User Equipment (UE) procedures in idle mode and procedures for cell reselection in connected mode (Release 99)".
[3] TS 25.413 "3^{rd} Generation Partnership Project; Technical Specification Group Radio Access Network; UTRAN lu interface RANAP signalling (Release 99)"
[4] ITU-T Recommendation I.363.2: "B-ISDN ATM Adaptation Layer specification: Type 2 AAL".
[5] ITU-T Recommendation Q.2630.1: "AAL type 2 Signalling Protocol (Capability Set 1)".
[6] TS 25.412 "3rd Generation Partnership Project; Technical Specification Group Radio Access Network; UTRAN lu Interface Signalling Transport (Release 99)".
[7] ITU-T Recommendation Q.2110: "B-ISDN ATM Adaptation Layer - Service Specific Connection Oriented Protocol (SSCOP)".
[8] ITU-T Recommendation I.361(02/99): "B-ISDN ATM Layer Specification"........
[9] ITU-T Recommendation G.703 (10/98): "Physical/electrical characteristics of hierarchical digital interfaces".
[10] ITU-T Recommendation I.432.1 (8/96): "ISDN User-Network interfaces, Layer 1 Recommendations, General characteristics".
[11] ITU-T Recommendation Q.2140: "B-ISDN ATM adaptation layer - Service specific coordination function for signalling at the network node interface (SSCF AT NNI)".

## Claims

1. Method to discriminate in a cellular communication system between the "out of service" or "in service status" of a specific CS or PS domain of network nodes connected at the one or the other end of the interface between the Core and the Access Network when the signalling from either domain is suddenly interrupted, **characterized in that** includes the following steps performed by a local node at one end of said interface:
a) starting an interrogation of the remote nodes at the other end of said interface sending a status request message towards said specific domain of the remote nodes.
b) waiting for a reply message from each interrogated remote node within a first defined time interval, and repeating up to N times the previous sending/waiting steps;
c) deciding to consider out of service said specific domain of a remote node which does not reply to the last sent status request message within the said first defined time interval;
d) carrying out known actions directed to prevent the mobile terminals of accessing to the services provided by said specific domain run out of service;

2. The method of claim 1, **characterised in that** it includes also the steps of
- sending the status request message periodically to said specific domain run out of service, waiting at each sending for a reply message;
- deciding as available again said specific domain run out of service, in case a reply message is received from said remote node;
- restoring the accesses to the previously inhibited services.

3. The method of the claim 1, **characterized in that** said reply message is transmitted within a second defined time interval.

4. The method of the claim 3, **characterized in that** it includes the step of sending an alarm/warning indication to the Operation & Maintenance Centre (OMC) about the not responding specific domain of the remote node.

5. The method of any preceding claim, **characterized in that** said status request message is sent to both the CS and PS domains of the remote nodes when the local node cannot discriminate which specific domain of the remote nodes could be run out of service

6. The method of any preceding claim, **characterized in that** when the local node is inside the Access Network, said preventive actions consist of updating the System Information transmitted to the camped mobile terminals.

7. The method of any preceding claim excluded the preceding one, **characterized in that** when the local node is inside the Core Network, said preventive actions consist of discarding the Paging messages.

8. The method of any preceding claim, **characterized in that** when the cellular communication system is standardized by 3GPP so that UTRAN, or GERAN, is the Access Network, said status request message and the respective reply message are the already existing RANAP protocol messages called respectively RESET_RESOURCE and RESET_RESOURCE_ACKNOWLEDGE, where the Information Element named "lu Signalling Connection Identifier" includes a code unused by the handled connections or a fictitious code recognised as such on the lu interface, in order to avoid the reset of the active connections.

9. The method of any preceding claim excluded the preceding one, **characterized in that** when the cellular communication system is standardized by 3GPP so that UTRAN, or GERAN, is the Access Network, said status request message and the respective reply message are RANAP compliant protocol messages.

10. The method of the preceding claim, **characterized in that** said status request message and the respective reply message include the following two new Information Elements indicated as Status and congestion cause,
- the range of the Status being enumerated as: congested, out of service, and in service;
- the congestion cause being coded as the "IE Establishment cause" defined for the protocols specified in the Radio Resource Control part.

11. The method of the previous claims **characterised in that** said reply message is an Acknowledgement message

12. The method of claim 1 **characterised in that** the step a) is triggered at the local node by a detected congestion of its call processors

13. The method of claim 1 **characterised in that** step a) is triggered at the local node by a detected internal alarm

14. The method of claim 1 characerised in that said interrogation and reply messages are sent in connectionless mode

15. The method of claim 1 **characterised in that in that** said step d) the actions taken to prevent the mobile terminals for accessing the out of service domain are performed broadcasting the domain unavailability via system information

16. The method of claim 1 **characterised in that in that** said step d) the actions taken to prevent the mobile terminals for accessing the out of service domain are performed discarding messages received by the local node from the camped mobile terminals addressing that speciifc domain
